# FASCICULE DE BREVET EUROPEEN

(11) **EP 2 402 538 B1**
(45) Date de publication et mention de la délivrance du brevet: **20.04.2016**
(21) Numéro de dépôt: 10168110.4
(22) Date de dépôt: 01.07.2010
(51) Int. Cl.: E05F 15/622, F16H 25/20

(54) **Vérin à vis pour la manoeuvre d'un ouvrant de véhicule**
Schraubenwinde zur Betätigung eines Öffnungselements eines Fahrzeugs
Jack screw for operating a vehicle door

(43) Date de publication de la demande: 04.01.2012
(73) Titulaire: U-Shin Deutschland Zugangssysteme GmbH, 85253 Erdweg (DE)
(72) Inventeur: Kummer, Frank, 94042, Creteil (FR); Orth, Dietmar, 94042, Creteil (FR)
(74) Mandataire: Cabinet Novitech

(56) Documents cités:
- EP-A2- 2 196 702
- DE-A1- 3 510 445
- DE-C1- 19 617 875
- FR-A1- 2 542 362
- US-A1- 2005 011 291

## Description

L'invention concerne les vérins de manoeuvre pour les ouvrants de véhicule automobile.

On connaît un tel vérin notamment du document EP-1 840 310. Le vérin comprend un assemblage à écrou et vis sans fin permettant de commander l'ouverture et la fermeture de l'ouvrant. Un tel vérin est soumis à des efforts importants qu'il transmet à la structure du véhicule, notamment lorsqu'il s'agit de manoeuvrer vers le haut pour son ouverture un ouvrant arrière mobile autour d'un axe de rotation horizontal. La liaison du vérin à la structure du véhicule doit donc être suffisamment robuste. On souhaite également qu'elle se fasse sans jeu entre les pièces, notamment lorsque le vérin est au repos avec l'ouvrant fermé. De tels jeux en effet sont générateurs de bruit lorsque le véhicule roule et entraînent une usure prématurée de certaines pièces. Enfin, il est préférable que le montage de la liaison du vérin à la structure du véhicule se fasse de façon simple et rapide avec un nombre réduit de pièces et suivant des étapes faciles à mettre en oeuvre. Le document US 2005/011291 décrit un vérin selon l'art antérieur.

Un but de l'invention est donc de fournir une liaison du vérin à la structure qui soit à la fois robuste, exempte de jeu et facile à assembler.

A cet effet, on prévoit selon l'invention un vérin de manoeuvre pour un ouvrant de véhicule, qui comprend les caractéristiques de la revendication 1.

Ainsi, grâce au tensionneur fixé à force, le vérin peut transmettre à la caisse du véhicule des efforts importants. Le vérin est fixé au palier sans jeu, qu'il soit actif ou au repos. De plus, l'assemblage des pièces est particulièrement simple à réaliser.

Le tensionneur est fixé à force sur le palier, et comprend des languettes ayant une arête venant en prise avec l'élément ou le palier.

Ainsi, une sollicitation exercée sur le tensionneur ne fait qu'augmenter sa prise sur l'élément ou le palier et donc améliorer sa fixation à ce dernier. Par conséquent, cette fixation résiste à des sollicitations d'intensité particulièrement élevée.

Le vérin pourra présenter en outre au moins l'une quelconque des caractéristiques suivantes :
- l'élément est en appui contre le palier au moyen d'au moins une face inclinée par rapport à l'axe ;
- l'élément et le palier présentent des faces d'appui mutuel inclinées par rapport à l'axe ;
- l'un parmi l'élément et le palier est en appui contre le tensionneur au moyen d'une face inclinée par rapport à l'axe ; et
- il comprend un adaptateur interposé entre le tensionneur et le palier, de préférence entre le tensionneur et l'élément, et présentant une face d'appui perpendiculaire à l'axe et une face d'appui inclinée par rapport à l'axe.

La ou les faces inclinées assurent un centrage relatif des pièces entre elles qui facilite leur montage et leur mise en place.

De préférence, l'élément et le palier forment une liaison rotule.

On procure ainsi un degré de liberté supplémentaire de l'élément par rapport au palier, ce qui réduit les risques de rendre le montage hyperstatique, ainsi que les sollicitations dans le vérin.

Avantageusement, l'élément présente dans le palier deux faces se succédant le long de l'axe, inclinées par rapport à ce dernier et orientées en sens opposés.

Cet agencement permet à l'élément de contribuer à la liaison rotule.

Avantageusement, le vérin comprend au moins un roulement interposé entre l'élément et l'un au moins parmi le tensionneur et le palier, le ou chaque roulement ayant de préférence une forme générale tronconique.

D'autres caractéristiques et avantages de l'invention apparaîtront encore dans la description suivante d'un mode de réalisation donné à titre d'exemple non limitatif en référence aux dessins dans lesquels :
- la figure 1 est une vue partielle en perspective d'un véhicule équipé d'un vérin selon l'invention pour l'actionnement de son ouvrant arrière et montrant ce dernier en position ouverte ;
- la figure 2 est une vue partielle en coupe axiale du vérin de la figure 1 ;
- la figure 3 est une vue à plus grande échelle d'une partie du vérin de la figure 2 et de son palier ; et
- la figure 4 est une vue en perspective éclatée des éléments de la figure 3.

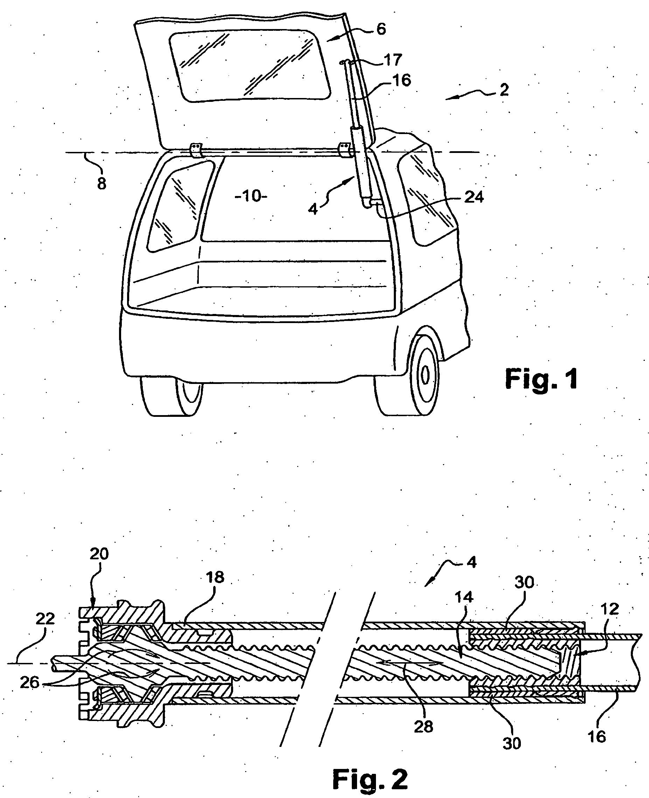

Nous avons illustré à la figure 1 un véhicule automobile 2 comprenant un vérin 4 selon l'invention.

Ce dernier permet l'actionnement automatique d'un ouvrant 6 du véhicule automobile qui est en l'espèce un hayon arrière monté mobile à rotation par rapport à la structure du véhicule autour d'un axe horizontal 8 situé en partie supérieure de l'ouvrant à l'état fermé et de la caisse. L'ouvrant s'ouvre donc au moyen d'un mouvement vers le haut et dégage ainsi une ouverture arrière 10 donnant sur l'habitacle du véhicule.

Néanmoins, le vérin peut servir à manoeuvrer toute porte du véhicule et notamment des portes latérales, un coffre à bagages avant ou arrière ou un compartiment de moteur avant ou arrière.

Le vérin qui va être décrit en référence aux figures 2 à 4 est globalement similaire à celui décrit dans le document EP-1 840 310 précité auquel on se référera pour certains détails de réalisation.

Le vérin 4 comprend un assemblage à écrou 12 et vis sans fin 14 en prise l'un avec l'autre moyennant une liaison vis-écrou hélicoïdale. L'écrou 12 est rigidement fixé à une tige 16 du vérin à une extrémité de cette dernière. L'autre extrémité 17 de la tige est articulée sur l'ouvrant 6. Le vérin comprend un bâti 18 portant un palier 20 dans lequel la vis 14 est montée mobile à rotation autour de l'axe principal 22 du vérin défini par la liaison vis-écrou. Le palier 20 relie le bâti 18 à la caisse du véhicule au moyen d'une liaison articulée 24. Le vérin comprend un moteur qui n'a pas été illustré, dont le carter est fixe par rapport au bâti 18 et qui assure la mise en rotation de la vis 14 autour de l'axe 22. Cette rotation illustrée sur la figure 2 par les flèches 26 entraîne, grâce à la liaison hélicoïdale, le coulissement de l'écrou 12 et de la tige 16 suivant la direction de l'axe 22 comme illustré par la double flèche 28. Ce coulissement est rendu possible par le blocage en rotation de la tige par rapport au bâti 18. Ce blocage résulte de l'engagement de reliefs 30 de la tige dans des cannelures longitudinales du bâti 18.

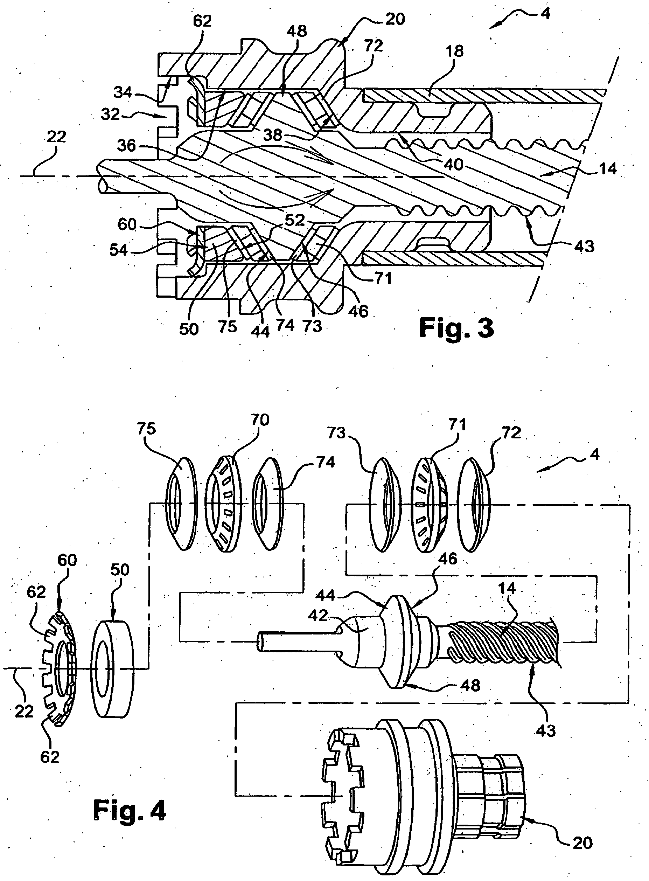

Nous allons maintenant décrire, principalement en référence aux figures 3 et 4, la partie du vérin voisine du palier.

Le palier 20 est rigidement fixé au bâti 18. Il présente, comme les autres pièces dont il va être question dans la suite, une forme à symétrie de révolution autour de l'axe 22, toutes ces pièces étant coaxiales. Le palier délimite ainsi une cavité 32 présentant successivement le long de l'axe 22 en direction de l'écrou 12 les faces internes suivantes :
- une face cylindrique 34 ;
- une face cylindrique 36 présentant un rayon inférieur à la précédente et séparée de cette dernière par un épaulement ;
- une face tronconique 38 dont le plus grand rayon est égal au rayon de la face cylindrique 36 et dont le rayon va en se réduisant en direction de l'écrou ; et
- une face cylindrique 40 dont le rayon est égal au plus petit rayon de la face tronconique 38.

Les trois faces cylindriques 34, 36 et 40 sont à section circulaire dans un plan perpendiculaire à l'axe 22.

La face 38 est localement inclinée par rapport à l'axe 22 et orientée en direction opposée à l'écrou.

La vis 14 présente une bourrelet 42 à une extrémité de son filet 43. Le bourrelet porte un relief à section trapézoïdale dans un plan radial à l'axe 22 présentant deux faces tronconiques 44, 46 reliées par une face de somment cylindrique 48. Les deux faces 44 et 46 sont donc inclinées par rapport à l'axe 22 et en direction opposée à ce dernier. De plus, elles sont orientées en sens opposés l'une à l'autre en se tournant le dos. La face 46 est localement parallèle à la face tronconique 38 du palier.

Le vérin comprend un adaptateur 50 présentant du côté de l'écrou 12 une face d'extrémité 52 de forme tronconique et localement inclinée par rapport à l'axe 22, en direction de ce dernier. Cette face est localement parallèle à la face 44. L'adaptateur 50 présente en outre une face plane d'extrémité orientée en direction opposée à l'écrou et perpendiculaire à l'axe 22. L'adaptateur 50 est préférentiellement réalisé en aluminium.

Le vérin comprend en outre un tensionneur métallique 60 présentant une forme générale plane et s'étendant perpendiculairement à l'axe 22. Il porte sur sa circonférence externe des languettes 62 inclinées par rapport à l'axe 22 en direction de ce dernier. Ces languettes présentent des arêtes terminales par lesquelles le tensionneur vient en prise avec la face 34 du palier pour leur fixation rigide relativement l'un à l'autre. Le tensionneur 60 est à titre d'exemple réalisé en acier.

Le vérin comprend en outre dans le présent exemple deux roulements qui sont en l'espèce des roulements à aiguilles 70, 71 chacun de forme tronconique. Les aiguilles ont une forme cylindrique et sont maintenues par une cage du roulement dans une configuration inclinée par rapport à l'axe 22. L'un 71 des roulements est logé entre les faces 38 et 46, en étant localement parallèle à ces dernières. L'autre roulement 70 est logé entre les faces 44 et 52, en étant localement parallèle à ces dernières.

Le vérin comprend enfin quatre rondelles tronconiques 72, 73, 74, 75 interposées respectivement entre :
- la face 38 et le roulement 71 ;
- ce dernier et la face 46 ;
- la face 44 et le roulement 70 ; et
- le roulement 70 et la face 52.

Pour le montage du vérin, on introduit dans le palier 20 dans cet ordre :
- la rondelle 72,
- le roulement 71,
- la rondelle 73,
- la vis 14,
- la rondelle 74
- l'autre roulement 70,
- la rondelle 75
- l'adaptateur 50,
- et enfin le tensionneur 60 fixé à force à l'intérieur du palier de façon à mettre en prise les languettes 62 avec le palier.

Toutes ces pièces sauf le palier et la vis présentent des ouvertures centrales par lesquelles elles sont enfilées sur la vis.

Ces éléments sont en appui mutuel dirent les uns sur les autres dans cet ordre Le tensionneur et le palier sont donc sollicités suivant la direction axiale et en sens opposés d'une part au niveau des languettes 62 du tensionneur et d'autre part au niveau de la face 38. Cet assemblage est réalisé sans jeu axial ni radial entre les pièces, que le vérin soit au repos ou qu'il actionné l'ouvrant. Le tensionneur maintient l'ensemble de l'assemblage en pression une fois le montage réalisé, rattrapant ainsi les jeux axiaux entre les pièces. Il s'agit d'un montage précontraint. Le tensionneur 60 forme un ressort de rattrapage des jeux. Il assure aussi la transmission des efforts axiaux entre le vérin, l'ouvrant et la caisse du véhicule lors de la manoeuvre de l'ouvrant.

La forme tronconique des faces concernées, notamment des faces 38, 46, 44 et 52, assure un centrage mutuel des pièces.

De plus, elle constitue une liaison rotule entre la vis 14 elle palier lui offrent un degré de liberté, en plus de sa rotation autour de l'axe 22. Cette liaison rotule réduit les risques de voir des contraintes apparaître dans le palier lors de la rotation de la vis.

Bien entendu, on pourra apporter à l'invention de nombreuses modifications sans sortir du cadre de celle-ci.

En variante, on peut prévoir de réaliser en une seule pièce le tensionneur 60 et l'adaptateur 50, la pièce étant alors par exemple en acier.

## Revendications

1. Vérin de manoeuvre (4) pour un ouvrant (6) de véhicule, comprenant:
- un assemblage à écrou (12) et vis sans fin (14) définissant un axe (22) ;
- un palier (20) dans lequel un élément (14) parmi l'écrou et la vis, par exemple cette dernière, est monté rotatif ; et
- un tensionneur (60) de forme générale plane et s'étendant perpendiculaire à l'axe (22) **caractérisé en ce que** le tensionneur (60) est fixé à force sur le palier et sollicite ceux-ci en appui axial mutuel lorsque le vérin est au repos,
dans lequel le tensionneur (60) comprend des languettes (62) ayant une arête venant en prise avec le palier (20) pour leur fixation rigide relativement l'un à l'autre.

2. Vérin selon la revendication précédente dans lequel l'élément (14) est en appui contre le palier (20) au moyen d'au moins une face (38, 46) inclinée par rapport à l'axe (22).

3. Vérin selon au moins l'une quelconque des revendications précédentes dans lequel l'élément (14) et le palier (20) présentent des faces d'appui mutuel (38, 46) inclinées par rapport à l'axe.

4. Vérin selon au moins l'une quelconque des revendications précédentes dans lequel le palier (20) est en appui contre le tensionneur (60) au moyen d'une face (38, 44) inclinée par rapport à l'axe.

5. Vérin selon au moins l'une quelconque des revendications précédentes qui comprend un adaptateur (50) interposé entre le tensionneur (60) et le palier (20), de préférence entre le tensionneur et l'élément (14), et présentant une face d'appui (54) perpendiculaire à l'axe et une face d'appui (52) inclinée par rapport à l'axe.

6. Vérin selon au moins l'une quelconque des revendications précédentes dans lequel l'élément (14) et le palier (20) forment une liaison rotule.

7. Vérin selon au moins l'une quelconque des revendications précédentes dans lequel l'élément (14) présente dans le palier deux faces (44, 46) se succédant le long de l'axe (22), inclinées par rapport à ce dernier et orientées en sens opposés.

8. Vérin selon au moins l'une quelconque des revendications précédentes qui comprend au moins un roulement (70, 71) interposé entre l'élément (14) et l'un au moins parmi le tensionneur (60) et le palier (20), le ou chaque roulement (70, 71) ayant de préférence une forme générale tronconique.

## Patentansprüche

1. Stellantrieb (4) für eine Öffnung (6) des Fahrzeugs, einschließlich:
- eine Gesamtheit Mutter (12) und Schnecke (14) eine Achse (22);
- ein Lager (20), wobei ein Element (14) von der Mutter und der Schraube, beispielsweise der letztere drehbar gelagert ist; und
- eine Spannvorrichtung (60) von allgemein ebener Form ist und sich senkrecht zur Achse (22) **dadurch gekennzeichnet, dass** die, Spanner (60) ist mit der Landung Kraft angebracht und bittet sie in gegenseitigem axialen Lager wenn die Klinke in Ruhe ist,
wobei der Spanner (60) Laschen (62) eine Kante Eingriff mit dem Lager (20) für die starre Befestigung relativ zueinander aufweisen.

2. Stellantrieb nach dem vorangehenden Anspruch, wobei das Element (14) gegen das Lager (20) mittels zumindest einer Fläche (38, 46) geneigt gegenüber der Achse (22).

3. Stellantrieb nach zumindest einem der vorhergehenden Ansprüche, wobei das Element (14) und das Lager (20) gegenseitige Kontaktflächen (38, 46) geneigt gegenüber der Achse.

4. Stellantrieb nach zumindest einem der vorhergehenden Ansprüche, wobei das Lager (20) an der Spannvorrichtung (60) mittels einer Stirnfläche (38, 44) zur Achse geneigt.

5. Stellantrieb nach zumindest einem der vorhergehenden Ansprüche, die einen Adapter (50) aufweist zwischen der Spannvorrichtung (60) und dem Lager (20) angeordnet ist, vorzugsweise zwischen der Spannvorrichtung und dem Element (14) und eine mit Lagerfläche (54) senkrecht zur Achse und eine Auflagefläche (52) zur Achse geneigt.

6. Stellantrieb nach zumindest einem der vorhergehenden Ansprüche, wobei das Element (14) und das Lager (20) ein Kugelgelenk bilden.

7. Stellantrieb nach zumindest einem der vorhergehenden Ansprüche, wobei das Element (14) in den beiden Lagerflächen (44, 46) im Anschluss an zueinander entlang der Achse (22) geneigt in Bezug auf die letztgenannte und in entgegengesetzte Richtungen orientiert.

8. Stellantrieb nach zumindest einem der vorhergehenden Ansprüche, die mindestens ein Lager umfasst (70, 71) zwischen dem Element angeordnet ist (14) und mindestens eine der Spannvorrichtung (60) und das Lager (20), das oder jedes Lager (70, 71) vorzugsweise eine im allgemeinen kegelstumpfförmige Form hat.

## Claims

1. Actuator (4) for an opening (6) of a vehicle, comprising:
- an assembly nut (12) and screw (14) defining an axis (22);
- a bearing (20) wherein an element (14) from the nut and the screw, for example the latter, is rotatably mounted; and
- a tensioner (60) of generally planar shape and extending perpendicular to the axis (22) **characterized in that** the tensioner (60) is force-fitted to the bearing and solicits them in mutual axial bearing when the jack is inoperative,
wherein the tensioner (60) comprises tongues (62) having an edge engaging the bearing (20) for rigidly securing them relatively to each other.

2. Actuator according to the preceding claim wherein the element (14) bears against the bearing (20) by means of at least one face (38, 46) inclined relative to the axis (22).

3. Actuator according to at least one of the preceding claims wherein the element (14) and the bearing (20) have mutual contact surfaces (38, 46) inclined relative to the axis.

4. Actuator according to at least one of the preceding claims wherein the bearing (20) bears against the tensioner (60) by means of a face (38, 44) inclined relative to the axis.

5. Actuator according to at least any one of the preceding claims which comprises an adapter (50) interposed between the tensioner (60) and the bearing (20), preferably between the tensioner and the element (14), and having a bearing face (54) perpendicular to the axis and a bearing face (52) inclined relative to the axis.

6. Actuator according to at least one of the preceding claims wherein the element (14) and the bearing (20) form a ball joint.

7. Actuator according to at least one of the preceding claims wherein the element (14) has in the two bearing faces (44, 46) following one another along the axis (22) inclined with respect to the latter and oriented in opposite directions.

8. Actuator according to at least one of the preceding claims which comprises at least one bearing (70, 71) interposed between the element (14) and at least one of the tensioner (60) and the bearing (20), the or each bearing (70, 71) preferably having a generally frustoconical shape.
